# EUROPÄISCHE PATENTSCHRIFT

(11) **EP 1 297 273 B1**
(45) Veröffentlichungstag und Bekanntmachung des Hinweises auf die Patenterteilung: **08.02.2006**
(21) Anmeldenummer: 01984062.8
(22) Anmeldetag: 13.03.2001
(51) Int. Cl.: F16K 1/226, F16K 1/228

(54) **KLAPPENDICHTUNG**
FLAP SEAL
DISPOSITIF D'ETANCHEITE POUR CLAPET

(30) Priorität: 27.06.2000 DE 10030300
(43) Veröffentlichungstag der Anmeldung: 02.04.2003
(73) Patentinhaber: Crane Process Flow Technologies GmbH, 40549 Düsseldorf (DE)
(72) Erfinder: MÜHLE, Hubertus, 40476 Düsseldorf (DE)
(74) Vertreter: LENZING GERBER
(86) Internationale Anmeldenummer: PCT/EP2001/002770
(87) Internationale Veröffentlichungsnummer: WO 2002/001098

(56) Entgegenhaltungen:
- EP-A- 0 499 821
- EP-A- 0 771 976
- DE-U- 29 822 791
- FR-A- 2 294 376
- JP-A- 57 184 767
- US-A- 4 396 199

## Beschreibung

Die vorliegende Erfindung betrifft eine Klappendichtung der Bauart einer Lamellendichtung mit den Merkmalen des Oberbegriffs des Anspruchs 1.

Derartige Klappendichtungen sind aus der Praxis bekannt und werden beispielsweise bei Absperrklappen in Dampfleitungen eingesetzt.

Eine gattungsgemäße Dichtung ist beispielsweise in der DE 298 22 791 U1 offenbart. Die dort gezeigte Klappendichtung weist zwei Deckringe auf, die ein Paket von Dichtringen umgeben. Diese Klappendichtung wird in Form von Kreisringscheiben zunächst paketartig zusammengesetzt. An der Innenseite weisen die metallischen Deckringe nach innen weisende Nasen auf, die bei der Montage unter axialem Verpressen des Scheibenpakets miteinander verschweißt werden und so die Klappendichtung dauerhaft zusammenhalten. Nach diesem Verschweißen wird durch spanende Bearbeitung die Klappendichtung in ihre vorgesehene Form gebracht, die der Mantelfläche eines Kegelabschnitts eines schiefen Kegels entspricht.

Andere aus dem Stand der Technik bekannte Klappendichtungen werden ebenfalls vor der spanenden Bearbeitung zusammengesetzt, in dem die einzelnen Lamellen miteinander verklebt werden.

Problematisch ist bei diesen Klappendichtungen, daß sie nach der spanenden Bearbeitung nicht mehr zerlegt werden können. Deshalb können die Deckscheiben, die normalerweise aus Metall sind, und die dazwischenliegenden Dichtscheiben nicht separat voneinander entgratet werden. Das Entgraten des fixierten Pakets von Scheiben aus üblicherweise unterschiedlichen Materialien führt deshalb nicht zu der optimalen Oberflächenqualität der Dichtfläche.

Es ist deshalb Aufgabe der vorliegenden Erfindung, eine Klappendichtung zu schaffen, die bei sicherer Fixierung der Einzelscheiben zueinander spanend bearbeitet werden kann, bei der weiter die Einzelscheiben gegebenenfalls separat voneinander entgratet werden können und die nach dem Entgraten im wesentlichen in der ursprünglichen Orientierung wieder zusammengesetzt werden kann.

Diese Aufgabe wird von einer Klappendichtung mit den Merkmalen des Anspruchs 1 gelöst. Ein erfindungsgemäßes Verfahren zur Fertigung einer Klappendichtung ist im Anspruch 10 angegeben.

Weil den Deckringe Positioniermittel zugeordnet sind, die die Deckringe zueinander im Umfangsrichtung und/oder zu den innenliegenden Dichtringen in Radialrichtung positionieren und in der Axialrichtung eine Relativbewegung erlauben, können die Ringe in der vorgesehenen Orientierung zusammengesetzt, axial verpresst und bearbeitet werden. Sie können dann in der Axialrichtung wieder separiert werden. Die Ringe können dann entgratet werden und in der ursprünglichen Orientierung wieder zusammengesetzt werden. Das Verpressen der Klappendichtung im Ventil während der Montage erfolgt ebenfalls wieder in Axialrichtung.

Vorteilhafte Ausführungsformen der Erfindung sind in den abhängigen Ansprüchen angegeben. Weil bei dem erfindungsgemäßen Verfahren zunächst das Stapeln der Einzelringe in einer vorgesehenen Reihenfolge erfolgt, wobei die Einzelringe radial und in Umfangsrichtung zueinander lösbar fixiert sind, dann das Anfertigen der äußeren Kontur mittels spanender Bearbeitung, das Separieren der Einzelringe, das Entgraten der Einzelringe, soweit erforderlich und schließlich das Zusammensetzen der Einzelringe in der ursprünglichen Orientierung und Reihenfolge sowie die Montage der Einzelringe mit axialer Pressung erfolgen, wird eine Klappendichtung gefertigt, bei der die Einzelringe in angemessener Weise fertig bearbeitet worden sind. Die Montage erfolgt dann wieder in der Anordnung, die die vorgesehene Kontur gewährleistet. Die Oberflächengestaltung der Einzelringe ist an der bearbeiteten Oberfläche gegenüber den bekannten Verfahren wesentlich verbessert.

Im folgenden wird ein Ausführungsbeispiel der vorliegenden Erfindung anhand der Zeichnung beschrieben.

Es zeigen:
- Fig. 1:: einen Deckring einer erfindungsgemäßen Klappendichtung in einer axialen Draufsicht;
- Fig. 2:: den Deckring gemäß Fig. 1 in einem Querschnitt von der Seite;
- Fig. 3:: einen Dichtring in einer axialen Draufsicht, sowie
- Fig. 4:: eine erfindungsgemäße Klappendichtung in einem Querschnitt von der Seite.

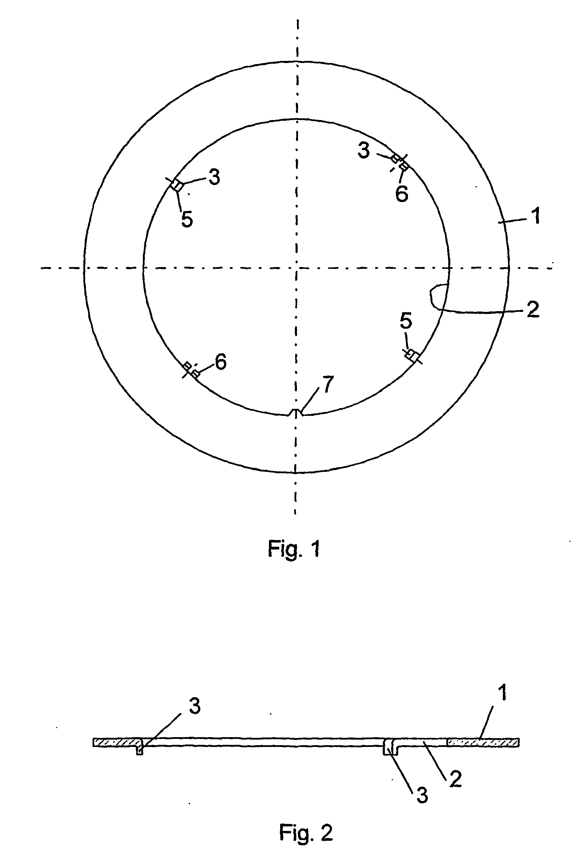

In der Fig. 1 ist ein Deckring 1 einer erfindungsgemäßen Klappendichtung in einer Draufsicht in Axialrichtung dargestellt. Der Deckring 1 ist wie die übrigen Einzelringe der Klappendichtung vor der Bearbeitung im wesentlichen kreisringförmig. An einer inneren Umfangsfläche 2 des Deckrings 1 sind als Positioniermittel einstückig angeformte Laschen 3 vorgesehen. Die Laschen 3 sind dabei an vier um jeweils 90 Grad in Umfangsrichtung gegeneinander versetzten Stellen angeordnet. Dabei ist an zwei um 180 Grad gegeneinander versetzten Stellen jeweils eine Lasche als nasenförmiges Positioniermittel 5 vorgesehen, während an zwei anderen, zwischen den nasenförmigen Positioniermitteln 5 liegenden Stellen jeweils zwei Laschen als gabelförmiges Positioniermittel 6 angeordnet sind. Die einzelnen Laschen 3 der gabelförmigen Positioniermittel 6 weisen dabei einen Abstand voneinander auf, der der Breite eines nasenförmigen Positioniermittels 5 entspricht. Die Laschen 3 sind um etwa 90 Grad gegenüber der Ebene des Deckrings 1 in Axialrichtung abgewinkelt und stehen zu einer Seite aus der Ebene des Deckrings 1 heraus.

Schließlich ist an der inneren Umfangsfläche an einer Stelle mittig zwischen einem nasenförmigen Positionierungsmittel 5 und einem gabelförmigen Positionierungsmittel 6 eine Indexmarkierung 7 angeordnet.

Die Fig. 2 zeigt den Deckring 1 aus Fig. 1 in einem Querschnitt von der Seite. Es ist ersichtlich, daß die Laschen 3 als einstückig angeformte Materialabschnitte aus der Ebene des Deckrings 1 nach unten abgewinkelt sind.

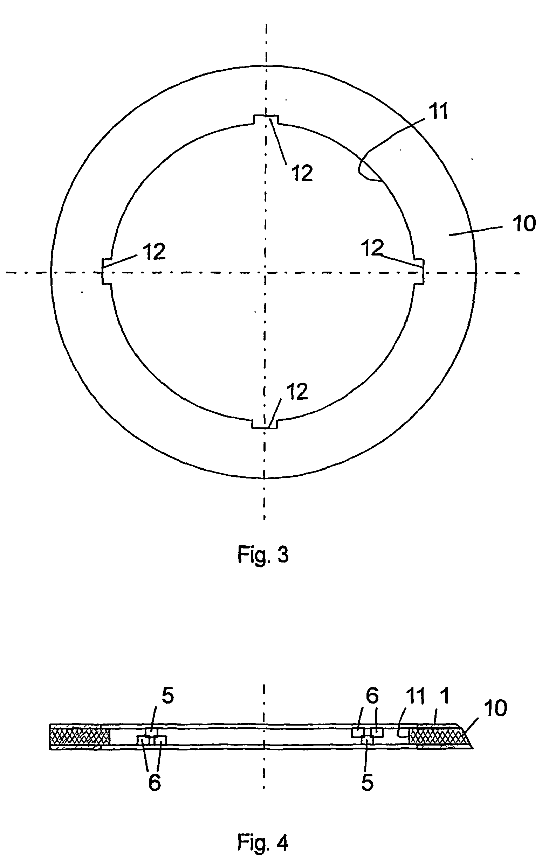

Die Fig. 3 zeigt einen Dichtring 10 in einer axialen Draufsicht entsprechend der Darstellung gemäß Fig. 1. Der Dichtring 10 ist ebenfalls vor der Bearbeitung kreisringförmig und weist einer innere Umfangsfläche 11 auf, die an vier jeweils um 90 Grad gegeneinander versetzten Stellen jeweils eine Ausnehmung 12 aufweist. Die Ausnehmungen 12 sind in voller axialer Höhe in die innere Umfangsfläche 11 eingebracht und erstrecken sich in Umfangsrichtung in einer Breite, die den äußeren Abmessungen einer gabelförmigen Positioniereinrichtung 6 entspricht.

Die Fig. 4 zeigt schließlich eine fertig bearbeitete Klappenscheibendichtung mit einem oberen und einem unteren Deckring 1, sowie einem dazwischenliegenden Dichtring 10. Die äußere Umfangsfläche der Klappendichtung ist durch spanende Bearbeitung in Gestalt eines Kegelabschnitts eines schiefen Kreiskegels bearbeitet.

Die Fertigung der in Fig. 4 gezeigten Klappendichtung aus den Bauelementen der Fig. 1 bis Fig. 3 erfolgt in der folgenden Weise:

Zuerst werden zwei baugleiche Deckringe 1, beispielsweise durch Laserschneiden, aus einem geeignetem Blech gefertigt. Die Laschen 3 werden durch Biegen zu einer Seite aus der Ebene der Deckringe 1 herausgekröpft. Der Dichtring 10 wird aus einem geeignetem Material in ähnlicher Weise gefertigt. Das Material kann dabei ein halogenierter Kunststoff, Graphit oder aber auch Metall sein. Es können auch mehrere Dichtringe 10 zum Einsatz kommen.

Nun wird der Dichtring 10 von beiden Seiten mit je einem Deckring 1 beaufschlagt, und zwar in der Weise, daß die Markierungen 7 der beiden Deckringe 1 in Axialrichtung übereinander liegen. Die Laschen 3 der Deckringe 1 weisen aufeinander zu. Bei dieser Orientierung greifen die nasenförmigen Positioniermittel 5 in den Zwischenraum der gabelförmigen Positioniermittel 6 ein. Die gabelförmigen Positioniermittel 6 liegend in den Ausschnitten 12 des Dichtrings 10. Auf diese Weise sind die beiden Deckringe 1 ebenso wie der Dichtring 10 gegen Verdrehen und Verlagern in der Ebene der Ringe gesichert. Axial bleibt die Anordnung jedoch komprimierbar.

Das Paket wird nun in einer geeigneten Vorrichtung verpresst und bearbeitet, so daß sich die an sich bekannte äußere Kontur gemäß Fig. 4 ergibt. Nun können die Einzelringe wieder auseinander genommen werden und die bearbeitete Außenseite kann entgratet werden, damit eine gewünschte Oberflächenqualität erreicht wird. Das erneute Zusammensetzen der Ringe 1, 10 führt aufgrund der eindeutigen Fixierung mit den Positioniermitteln 5, 6 und den Ausschnitten 12 dazu, daß die Klappendichtung in der Orientierung zusammengesetzt wird, in der sie auch bearbeitet wurde. Schließlich kann das zusammengesetzte Paket in einer an sich bekannten Halterung eines Klappenscheibenventils durch axiales Verpressen montiert werden.

Es ergibt sich insgesamt eine Klappendichtung, die bei relativ einfacher Bearbeitung eine wesentlich verbesserte Oberflächenqualität aufweist.

Gegenüber den bisher bekannten Klappendichtungen ist weiter von Vorteil, daß die einzelnen Ringe nicht mehr miteinander verklebt oder verschweißt werden müssen. Dieser Verarbeitungsschritt entfällt. Gegenüber verklebten Klappendichtungen ist weiter von Vorteil, daß erstmals PTFE-haltige Dichtringe verwendet werden können, die nicht klebbar sind. Es ist außerdem möglich, die Deckringe in der äußeren Kontur geringfügig kleiner zu fertigen als den Dichtring. Hierdurch wird verhindert, daß der Klappensitz mit den Deckringen in Berührung kommt und eventuell vorzeitig verschleißt.

Die wesentlichen Vorteile ergeben sich nicht nur bei der dargestellten Anordnung mit zwei Deckringen 1 und einem Dichtring 10. Vielmehr können auch als Dichtringe abwechselnd Graphit- und Metallringe oder eine größere Anzahl von Graphitringen eingesetzt werden. Es ist auch möglich, eine Anzahl von Dichtringen 10 einzusetzen, die sämtlich aus Metall sind. Die separate Nachbearbeitungsmöglichkeit erlaubt auch hierbei ein hohes Qualitätsniveau der späteren Dichtfläche.

Außer der beschriebenen Ausführungsform können die Dichtringe auch eine innere Umfangsfläche aufweisen, die von der beschriebenen Mantelfläche eines Kreiszylinders abweicht. So kann z.B. der von ihr begrenzte innere Ausschnitt auch vieleckig und insbesondere quadratisch sein.

## Patentansprüche

1. Klappendichtung der Bauart einer Lamellendichtung aus wenigstens drei paketartig aufeinander liegenden, im wesentlichen ebenen Einzelringen (1, 10), wobei die Einzelringe (1, 10) einen inneren Ausschnitt aufweisen, der jeweils von einer inneren Umfangsfläche (2, 11) begrenzt ist und wobei die außen liegenden Einzelringe (1) Deckringe sind und die innen liegenden Einzelringe (10) Dichtringe sind, **dadurch gekennzeichnet, daß** den Deckringen (1) Positioniermittel (3) zugeordnet sind, die die Deckringe (1) zueinander und/oder zu den innen liegenden Dichtringen (10) in Umfangsrichtung und in Radialrichtung positionieren und in der Axialrichtung eine Relativbewegung erlauben.

2. Klappendichtung nach Anspruch 1, **dadurch gekennzeichnet, daß** die Deckringe (1) im Bereich der inneren Umfangsfläche (11) angeordnete Laschen (3) aufweisen, die aus der Ebene herausstehen.

3. Klappendichtung nach einem der vorhergehenden Ansprüche, **dadurch gekennzeichnet, daß** die Laschen (3) gabelförmige (6) und nasenförmige (7) Positioniermittel bilden.

4. Klappendichtung nach einem der vorhergehenden Ansprüche, **dadurch gekennzeichnet, daß** die gabelförmigen und die nasenförmigen Positioniermittel (6, 7) in Umfangsrichtung der inneren Umfangsfläche (11) abwechselnd angeordnet sind.

5. Klappendichtung nach einem der vorhergehenden Ansprüche, **dadurch gekennzeichnet, daß** die beiden Deckringe (1) baugleich sind und mit aufeinander zu weisenden Positioniermitteln (3) in der Klappendichtung angeordnet sind, wobei jeweils die nasenförmigen Positioniermittel (5) eines Deckrings (1) in die gabelförmigen Positioniermittel (6) des gegenüberliegenden anderen Deckrings (1) so eingreifen, daß in Umfangsrichtung ein Formschluß entsteht.

6. Klappendichtung nach einem der vorhergehenden Ansprüche, **dadurch gekennzeichnet, daß** die Positioniermittel (3) an der inneren Umfangsfläche (12) des wenigstens einen innen liegenden Dichtring (10) anliegen, so daß der Dichtring (10) gegenüber den Deckringen in Radialrichtung gesichert ist.

7. Klappendichtung nach einem der vorhergehenden Ansprüche, **dadurch gekennzeichnet, daß** beide Deckringe (1) an wenigstens drei Stellen mit ihren Positioniermitteln (3) an der inneren Umfangsfläche (11) des wenigstens einen inneren Dichtrings (10) anliegen.

8. Klappendichtung nach einem der vorhergehenden Ansprüche, **dadurch gekennzeichnet, daß** die innere Umfangsfläche (11) des inneren Dichtrings (10) Ausnehmungen (12) aufweist, in die die Positioniermittel (3) eingreifen und die den Dichtring (10) zu den beiden Deckringen (1) in Umfangsrichtung fixieren.

9. Klappendichtung nach einem der vorhergehenden Ansprüche, **dadurch gekennzeichnet, daß** der wenigstens eine innen liegende Dichtring (10) aus einem Kunststoffmaterial, insbesondere einem PTFE-haltigen Kunststoff, oder aus Graphit gefertigt ist.

10. Verfahren zur Fertigung einer paketartigen Klappendichtung aus Einzelringen, **dadurch gekennzeichnet, daß** folgende Schritte vorgesehen sind:
Stapeln der Einzelringe in einer vorgesehenen Reihenfolge, wobei die Einzelringe durch zugeordnete Positioniermittel radial und in Umfangsrichtung zueinander lösbar fixiert sind;
Anfertigen der äußeren Kontur mittels spanender Bearbeitung;
Separieren der Einzelringe;
Entgraten der Einzelringe, soweit erforderlich; Zusammensetzen der Einzelringe in der ursprünglichen Reihenfolge und Orientierung;
Montage der Klappendichtung mit axialer Pressung.

## Revendications

1. Dispositif d'étanchéité pour clapet du type d'une garniture d'étanchéité à lamelles formée par au moins trois bagues individuelles (1, 10) sensiblement planes, superposées en formant un paquet, les bagues individuelles (1, 10) ayant une découpe intérieure dont chacune est délimitée par une face périphérique (2, 11) intérieure et les bagues individuelles (1), disposées à l'extérieur, étant des bagues de protection et les bagues individuelles (10), disposées à l'intérieur, étant des bagues d'étanchéité, **caractérisé en ce qu'**aux bagues de protection (1) sont associés des moyens de positionnement (3), par lesquels les bagues de protection (1) sont maintenues les unes par rapport aux autres et/ou par rapport aux bagues d'étanchéité (10) intérieures dans le sens périphérique et dans le sens radial et lesquels permettent un mouvement relatif dans le sens axial.

2. Dispositif d'étanchéité pour clapet selon la revendication 1, **caractérisé en ce que** les bagues de protection (1), dans la zone de leur face périphérique intérieure (11), comportent des pattes (3) qui s'avancent en saillie hors du plan.

3. Dispositif d'étanchéité pour clapet selon l'une quelconque des revendications précédentes, **caractérisé en ce que** les pattes (3) forment des moyens de positionnement en forme de fourche (6) et en forme de bec (7).

4. Dispositif d'étanchéité pour clapet selon l'une quelconque des revendications précédentes, **caractérisé en ce que** les moyens de positionnement (6, 7) en forme de fourche et en forme de bec sont agencés en alternance dans le sens périphérique sur la face périphérique intérieure (11).

5. Dispositif d'étanchéité pour clapet selon l'une quelconque des revendications précédentes, **caractérisé en ce que** les deux bagues de protection (1) sont conçues de manière identique et sont agencées dans le dispositif d'étanchéité pour clapet avec des moyens de positionnement (3) orientés les uns vers les autres, chaque moyen de positionnement en forme de bec (5) d'une bague de protection (1) s'engageant dans chaque moyen de positionnement en forme de fourche (6) sur la bague de protection (1) disposée en face, de telle sorte qu'il se forme dans le sens périphérique un assemblage par emboîtement.

6. Dispositif d'étanchéité pour clapet selon l'une quelconque des revendications précédentes, **caractérisé en ce que** les moyens de positionnement (3) sont en appui sur la face périphérique intérieure (11) de ladite au moins une bague d'étanchéité (10) intérieure, de telle sorte que la bague d'étanchéité (10) est bloquée dans le sens radial par rapport aux bagues de protection.

7. Dispositif d'étanchéité pour clapet selon l'une quelconque des revendications précédentes, **caractérisé en ce que** les deux bagues de protection (1), au niveau d'au moins trois emplacements, sont en appui avec leurs moyens de positionnement (3) sur la face périphérique intérieure (11) de ladite au moins une bague d'étanchéité (10) intérieure.

8. Dispositif d'étanchéité pour clapet selon l'une quelconque des revendications précédentes, **caractérisé en ce que** la face périphérique intérieure (11) de la bague d'étanchéité (10) intérieure comporte des évidements (12), dans lesquels s'engagent les moyens de positionnement (3) et qui fixent la bague d'étanchéité (10) dans le sens périphérique par rapport aux deux bagues de protection (1).

9. Dispositif d'étanchéité pour clapet selon l'une quelconque des revendications précédentes, **caractérisé en ce que** ladite au moins une bague d'étanchéité (10) intérieure est réalisée dans une matière plastique, en particulier une matière plastique contenant du PTFE, ou en graphite.

10. Procédé de réalisation d'un dispositif d'étanchéité pour clapet en forme de paquet, constitué par des bagues individuelles, **caractérisé en ce qu'**il est prévu les étapes suivantes :
- empilage des bagues individuelles dans un ordre prédéfini, les bagues individuelles étant fixées de manière amovible les unes par rapport aux autres dans le sens radial et le sens périphérique, par l'intermédiaire de moyens de positionnement associés ;
- réalisation du contour extérieur au moyen d'un usinage par enlèvement de copeaux ;
- séparation des bagues individuelles ;
- ébavurage des bagues individuelles, si nécessaire ;
- regroupement des bagues individuelles dans l'ordre initial et l'orientation initiale;
- montage du dispositif d'étanchéité pour clapet avec une compression axiale.

## Claims

1. Flap seal in the form of a lamella seal, comprising at least three, essentially flat individual rings (1, 10) lying one on top of another in a bundle-type form, whereby the individual rings (1, 10) comprise an inner part, which is respectively defined by an inner circumferential surface (2, 11) and whereby the outer-lying individual rings (1) are covering rings and the inner-lying individual rings (10) are sealing rings, **characterized in that** positioning means (3) are allocated to the covering rings (1), which position the covering rings (1) in relation to one another and/or in relation to the inner-lying sealing rings (10) in the circumferential direction and in the radial direction and enable a relative movement in the axial direction.

2. Flap seal according to Claim 1, **characterized in that** the covering rings (1) have tabs (3) arranged in the region of the inner circumferential surface (11), which stand out from the level.

3. Flap seal according to any one of the preceding claims, **characterized in that** the tabs (3) form bifurcated (6) and lug-shaped (7) positioning means.

4. Flap seal according to any one of the preceding claims, **characterized in that** the bifurcated and the lug-shaped positioning means (6, 7) are arranged alternately in the circumferential direction of the inner circumferential surface (11).

5. Flap seal according to any one of the preceding claims, **characterized in that** the two covering rings (1) are identical and arranged in the flap seal with positioning means (3) pointing towards one another, whereby the lug-shaped positioning means (5) of a covering ring (1) in each case engage in the bifurcated positioning means (6) of the opposite-lying other covering ring (1), in such a way that a positive fit in the circumferential direction results.

6. Flap seal according to any one of the preceding claims, **characterized in that** the positioning means (3) rest on the inner circumferential surface (12) of the at least one inner-lying sealing ring (10), so that the sealing ring (10) opposite the covering rings is fixed in the radial direction.

7. Flap seal according to any one of the preceding claims, **characterized in that** both covering rings (1) in at least three places rest with their positioning means (3) on the inner circumferential surface (11) of the at least one inner sealing ring (10).

8. Flap seal according to any one of the preceding claims, **characterized in that** the inner circumferential surface (11) of the inner sealing ring (10) has recesses (12), in which the positioning means (3) engage and which fix the sealing ring (10) to the two covering rings (1) in the circumferential direction.

9. Flap seal according to any one of the preceding claims, **characterized in that** at least one inner-lying sealing ring (10) is made from a plastic material, in particular a PTFE-containing plastic, or from graphite.

10. Process for manufacturing a bundle-type flap seal consisting of individual rings, **characterized in that** the following steps are proposed:
Stacking the individual rings in a planned sequence, whereby the individual rings are detachably fixed to one another radially and in the circumferential direction by allocated positioning means;
Shaping the outer contour by machining;
Separating the individual rings;
De-burring the individual rings if necessary;
Re-assembling the individual rings in the original sequence and orientation;
Installing the flap seal with axial pressing.
